# EUROPÄISCHE PATENTSCHRIFT

(11) **EP 2 620 755 B1**
(45) Veröffentlichungstag und Bekanntmachung des Hinweises auf die Patenterteilung: **17.09.2014**
(21) Anmeldenummer: 12152579.4
(22) Anmeldetag: 26.01.2012
(51) Int. Cl.: G01G 13/02, G01G 13/00, B25J 15/00, B01L 3/02

(54) **Dosiervorrichtung für fliessfähige Substanzen**
Metering device for flowing substances
Dispositif de dosage pour substances pouvant s'écouler

(43) Veröffentlichungstag der Anmeldung: 31.07.2013
(73) Patentinhaber: Mettler-Toledo AG, 8606 Greifensee (CH)
(72) Erfinder: Zehnder, Marc, 8037 Zürich (CH); Frei, Pascal, 8640 Rapperswil (CH)

(56) Entgegenhaltungen:
- EP-A1- 1 947 427
- US-A1- 2011 220 686

## Beschreibung

Die vorliegende Erfindung bezieht sich auf eine Dosiervorrichtung für fliessfähige Dosiergüter, insbesondere Pulver, Granulate und Pasten, mit einer Trägersäule sowie mit einem von der Trägersäule auskragenden horizontalen Trägerarm, welcher eine Aufnahme für eine auswechselbare Dosiereinheit aufweist, aus welcher definierte Mengen des Dosierguts in einen darunter befindlichen, typischerweise auf einer Lastempfängerplattform einer Waage stehenden Zielbehälter dosiert werden.

Dosiervorrichtungen mit Dosiereinheiten, die üblicherweise ein Entnahmegefäss und einen Dosierkopf aufweisen, finden insbesondere beim Dosieren von kleinen Mengen beispielsweise toxischer Substanzen mit hoher Präzision in kleine Zielgefässe Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

In der US 2011/0220686 wird eine Dosiervorrichtung beschrieben, in welche eine ein Entnahmegefäss und einen Dosierkopf aufweisende Dosiereinheit eingesetzt werden kann. Das Entnahmegefäss ist im wesentlichen ein zylindrischer Behälter, der nach dem Befüllen mit Dosiersubstanz mit dem Dosierkopf verschlossen wird. Der Dosierkopf beinhaltet einen Grundkörper, der eine Stirnfläche und eine Anschlussstelle für das Entnahmegefäss oder einen Verschlussdeckel aufweist. In der Stirnfläche des Grundkörpers ist eine mit der Anschlussstelle verbundene Auslassöffnung angeordnet. Ferner weist der Dosierkopf einen Schieber auf, welcher am Grundkörper parallel zur Stirnfläche mittels einer Linearführung geführt ist. Zur Betätigung des Schiebers weist der Dosierkopf ein Stellglied auf, das um eine zur Stirnfläche orthogonal angeordnete Drehachse drehbar am Grundkörper angeordnet ist und einen Durchbruch beinhaltet, wobei in jeder Stellung des Stellgliedes zum Grundkörper die Auslassöffnung innerhalb der Fläche des Durchbruchs angeordnet ist. Der Schieber beinhaltet eine Durchlassöffnung und ist zwischen dem Grundkörper und dem Stellglied angeordnet. Mittels einer Drehung des Stellgliedes relativ zum Grundkörper ist der Schieber linear zum Grundkörper verschiebbar, wobei der Durchlassquerschnitt des Dosierkopfs durch das Verschieben der Durchlassöffnung relativ zur Auslassöffnung variierbar und die Durchflussmenge fliessfähigen Dosierguts durch die Durchlassöffnung regelbar ist.

In der Betriebsstellung ist die in die Dosiervorrichtung eingesetzte Dosiereinheit so angeordnet, dass der Dosierkopf nach unten weist und dass sich die Auslassöffnung unmittelbar über dem Zielbehälter befindet. Die Dosiereinheit muss deshalb entweder bereits kopfüber in einen Aufnahmesitz der Dosiervorrichtung eingesetzt werden, oder die Dosiervorrichtung muss mit einem kopfüber schwenkbaren Aufnahmesitz ausgerüstet sein, in welchem die Dosiereinheit durch eine Halteeinrichtung gegen Herausfallen gesichert werden kann.

Eine Dosiervorrichtung mit einer kopfüber drehbaren Aufnahme für eine Dosiereinheit wird in Figur 6 der bereits oben zitierten US 2011/0220686 gezeigt. Die in aufrechter Position, d.h. mit dem Dosierkopf nach oben, in die Aufnahme eingesetzte Dosiereinheit wird durch einen an einem Führungsstab schwenkbaren und linear verschiebbaren und fixierbaren Haltering gesichert, bevor die Aufnahme kopfüber gedreht und die Dosiereinheit damit in die Betriebsstellung gebracht wird.

Speziell im Interesse der Betriebssicherheit scheint es höchst erwünscht, die Funktion des Sicherns und Entsicherns der Dosiereinheit zu automatisieren und insbesondere mit der Überkopfdrehung der in die Aufnahme eingesetzten Dosiereinheit so zu koppeln, dass ein Herausfallen der Dosiereinheit aus der Aufnahme absolut verunmöglicht wird. Aus Figur 6 sowie der zugehörigen Beschreibung in US 2011/0220686 muss man jedoch schliessen, dass die drei Schritte des Sicherungsvorganges, Schwenken, Lineares Verschieben und Fixieren des Halterings, manuell von einer Bedienungsperson auszuführen sind bevor die Aufnahme mit der eingesetzten Dosiereinheit kopfüber um eine horizontale Achse gedreht wird.

Bei näherer Betrachtung dieses Sicherungskonzepts mit einem an einem Führungsstab schwenkbaren und linear verschiebbaren und fixierbaren Haltering zeigt sich allerdings, dass ein hierfür geeigneter Betätigungsmechanismus relativ kompliziert und entsprechend aufwändig ausfallen würde. Infolgedessen erkennt man das Bedürfnis nach einem grundsätzlich verschiedenen Konzept zum sicheren Festhalten der Dosiereinheit im Aufnahmesitz der Dosiereinrichtung.

Des weiteren wird bei der Dosiervorrichtung von Figur 6 in US 2011/0220686 vorgeschlagen, das Dosiergut dadurch aufzulockern, dass die Schwenkbewegung der Aufnahme mit der eingesetzten Dosiereinheit um eine horizontale Achse vor dem Dosieren wiederholt vorwärts und rückwärts alternierend ausgeführt wird. Zum Auflockern sowie auch zum Ablösen des Dosiergutes von der Innenwand des Entnahmebehälters sind jedoch schlagartige Bewegungen weit wirksamer als die vergleichsweise sanfte Schwenkbewegung um die horizontale Achse.

Die vorliegende Erfindung hat deshalb die Aufgabe, eine Dosiervorrichtung mit einer Aufnahme für eine Dosiereinheit zu schaffen, worin die in die Aufnahme eingesetzte Dosiereinheit beim Überkopfschwenken durch eine Halteeinrichtung gegen Herausfallen gesichert ist und ausserdem einer Schlagbewegung zum Auflockern des Dosiergutes unterworfen werden kann, wobei sowohl die Halteeinrichtung als auch die Einrichung zur Erzeugung der Schlagbewegung für eine einfache automatisierte Betriebsweise ausgelegt sind.

Diese Aufgabe wird durch eine Dosiervorrichtung gemäss Anspruch 1 erfüllt. Vorteilhafte Ausgestaltungen und Einzelheiten der Erfindung sind in den abhängigen Ansprüchen angegeben.

Eine Dosiervorrichtung zur Dosierung fliessfähiger Substanzen umfasst eine Trägersäule sowie einen von der Trägersäule auskragenden horizontalen Trägerarm mit einer Halteeinheit, an der mindestens eine beweglich gelagerte Aufnahmeeinheit angeordnet ist. In der Aufnahmeeinheit ist mindestens eine Dosiereinheit einsetzbar beziehungsweise aus der Aufnahmeeinheit entfernbar, wobei die Halteeinheit mindestens einen auf die Aufnahmeeinheit wirkenden Bewegungsaktuator enthält. Die vom Bewegungsaktuator erzeugte Bewegung der Aufnahmeeinheit dient dazu, das in der Dosiereinheit befindliche Dosiergut aufzulockern.

Die Gestaltung der Dosiereinheit, welche üblicherweise einen Entnahmebehälter und einen Dosierkopf umfasst, ist ausführlich beschrieben und abgebildet in US 2011/0220686.

Die in die Aufnahmeeinheit eingesetzte Dosiereinheit ist mittels eines vorgespannten Klemmmoduls an der Aufnahmeeinheit befestigbar. Diese Befestigung sichert die Dosiereinheit gegen Herausfallen aus ihrem Sitz in der Aufnahmeeinheit und ist insbesondere unerlässlich in Dosiervorrichtungen, bei denen die Dosiereinheit mit dem Dosierkopf nach oben in die Aufnahmeeinheit eingesetzt wird und anschliessend durch Schwenken der Aufnahmeeinheit kopfüber in die Dosierstellung gebracht wird. Für eine wirksame Übertragung der erwähnten Bewegung zum Lockern des Dosiergutes ist es ausserdem wichtig, dass die Dosiereinheit fest an ihren Sitz in der Aufnahmeeinheit gebunden bleibt. Zum Lösen der Klemmung für das Einsetzen oder Entfernen einer Dosiereinheit ist das Klemmmodul mittels eines der Halteeinheit zugeordnenten Spreizmoduls aus einer Dosierposition in eine Beschickungsposition spreizbar, wobei das Spreizmodul in der Dosierposition von der Aufnahmeeinheit entkoppelt ist. Mit andern Worten, das Spreizmodul ist mit dem Klemmmodul nur in der Beschickungsposition in Berührungseingriff, um das Klemmmodul während des Einsetzens oder Entfernens einer Dosiereinhei zu spreizen und offenzuhalten.

Das Klemmmodul in bevorzugten Ausführungsformen der Dosiervorrichtung weist mindestens ein Federelement auf, welches in der Dosierposition vorgespannt ist und dadurch die Klemmkraft erzeugt. Besonders zweckmässig ist eine Lösung, bei der zwei identische Hälften des Klemmmoduls als Blechstanzteile geformt und so gestaltet sind, dass sie sich bei der Spreizung elastisch deformieren können, sodass die Funktion des Federelementes in den Klemmmodulhälften integriert ist. Es ist jedoch auch möglich das Klemmmodul mittels anderer geeigneter Verfahren herzustellen. Geeignete Verfahren sind beispielsweise Spritzguss, Fräsen oder Lasern.

In bevorzugter Ausführungsform hat das Klemmmodul zwei Klemmbacken. In der Dosierposition des Klemmmoduls wird die Dosiereinheit zwischen den beiden Klemmbacken in einer gegenüber der Aufnahmeeinheit vertikal definierten und unverrückbaren Lage festgehalten. In bezug auf eine vertikale Zentralachse der Dosiereinheit sind die Klemmbacken einander diametral entgegengesetzt angeordnet.

Vorteilhafterweise ist mindestens eine der Klemmbacken mit einem Positionierungselement versehen, wobei die Dosiereinheit durch gegenseitigen Eingriff des Positionierungselementes und einer dazu komplementären Ausformung der Dosiereinheit in einer gegenüber der Aufnahmeeinheit definierten Drehlage relativ zur vertikalen Zentralachse positionierbar ist.

In bevorzugten Ausführungsformen der Erfindung ist das Klemmmodul an der Aufnahmeeinheit befestigt. Das Klemmmodul ist somit Teil der Aufnahmeeinheit und somit während des Dosiervorgangs gemeinsam mit dieser beweglich.

Das Spreizmodul weist vorzugsweise zwei Spreizschenkel auf, welche die beiden Klemmbacken des Klemmmoduls zum Einsetzen und Herausnehmen der Dosiereinheit auseinanderdrücken können.

Jeder Spreizschenkel weist ein erstes und ein zweites Ende auf. Dabei ist das erste Ende jedes Spreizschenkels drehbar an der Halteeinheit befestigt, während das dem ersten Ende entgegengesetzte zweite Ende des Spreizschenkels in einem Freiraum zwischen der Dosiereinheit und der Klemmbacke angeordnet ist.

Vorteilhafterweise hat das zweite Ende jedes der beiden Spreizschenkel eine nasenförmig gegen die entsprechende Klemmbacke gerichtete Kontur, damit der Freiraum zwischen der Dosiereinheit und der Klemmbacke im Interesse einer kompakten Bauanordnung möglichst klein gehalten werden kann. Vor allem bei zylinderförmigen Dosiereinheiten kann auf diese Weise eine kompakte Anordnung geschaffen werden.

Wie oben erwähnt, ist das Spreizmodul in der Dosierposition von der Aufnahmeeinrichtung entkoppelt. Die zweiten Enden der Spreizschenkel sind deshalb in der Dosierposition von der Aufnahmeeinheit und dem mit ihr verbundenen Klemmmodul berührungsfrei beabstandet.

In einer bevorzugten Ausführung des Spreizmoduls sind die Spreizschenkel mittels eines drehbeweglichen Betätigungselements von der Dosierposition in die Beschickungsposition bewegbar. Das Betätigungselement kann z.B. als drehbare Scheibe mit einer elliptischen Führungsnut ausgestaltet sein. Durch Zusammenwirken der Führungsnut mit an den Spreizschenkeln angeordneten Stiften werden die Spreizschenkel beim Drehen des Betätigungselements von der ungespreizten Dosierposition in die gespreizte Beschickungsposition bewegt.

Die bewegliche Lagerung der Aufnahmeeinheit an der Halteeinheit ist vorzugsweise in der Form einer federnden Verbindung ausgeführt, z.B. dadurch dass die Aufnahmeeinheit mit elastischen Parallellenkern an der Halteeinheit geführt wird.

Der mindestens eine Bewegungsaktuator, welcher der Halteeinheit zugeordnet ist und auf die Aufnahmeeinheit wirkt, beeinhaltet vorzugsweise einen Motor, welcher über eine Nocken- oder Kurvenscheibe Schüttel- oder Schlagbewegungen auf die federnd geführte Aufnahmemeinheit überträgt mit dem Zweck, das in der Dosiereinheit befindliche Dosiergut aufzulockern.

In bevorzugten Ausführungsformen der Dosiervorrichtung ist der Trägerarm an der Trägersäule um eine horizontale Drehachse H aus einer Beschickungsstellung in eine Dosierstellung drehbar. Die Erfindung erstreckt sich jedoch auch auf Ausführungsformen, bei denen der Trägerarm nicht drehbar ist und die in die Aufnahmeeinheit eingesetzte Dosiereinheit somit nicht kopfüber geschwenkt wird. Auch in diesem Fall ist es wichtig, die Dosiereinheit fest an ihren Sitz in der Aufnahmeeinheit zu binden, damit die genannten Schüttel- oder Schlagbewegungen wirksam auf das in der Dosiereinheit befindliche Dosiermaterial übertagen werden.

Einzelheiten der erfindungsgemässen Dosiervorrichtung ergeben sich anhand der Beschreibung der in den Zeichnungen dargestellten Ausführungsbeispiele. Es zeigen
- Figur 1: eine schematische Gesamtansicht der erfindungsgemässen Dosiervorrichtung in isometrischer Perspektive mit dem Trägerarm in Beschickungsposition und mit eingesetzter Dosiereinheit;
- Figur 2: eine Explosionszeichnung einer Dosiereinheit gemäss dem Stand der Technik;
- Figur 3: eine Detailansicht des Trägerarms der erfindungsgemässen Dosiervorrichtung in Beschickungsposition, jedoch ohne eingesetzte Dosiereinheit;
- Figur 4: den Trägerarm aus Figur 3 in Dosierposition;
- Figur 5: den Trägerarm aus Figur 3 in Beschickungsposition, mit Blick auf den geöffneten Klemmmodul und Spreizmodul;
- Figur 6: den Trägerarm aus Figur 3 in Dosierposition, mit Blick auf den geschlossenen Klemmmodul und Spreizmodul;
- Figur 7: den Trägerarm aus Figur 3 in Dosierposition, von der Seite gesehen mit geöffneten Klemmmodul;
- Figur 8: eine schematische Darstellung einer zweiten Ausführungsform des erfindungsgemässen Klemmmoduls in Dosierposition;
- Figur 9: eine schematische Darstellung der zweiten Ausführungsform des erfindungsgemässen Klemmmoduls in Beschickungsposition und
- Figur 10: eine schematische Darstellung der Betätigungsfunktionen, welchen die Dosiereinheit in der erfindungsgemässen Dosiervorrichtung unterworfen ist.

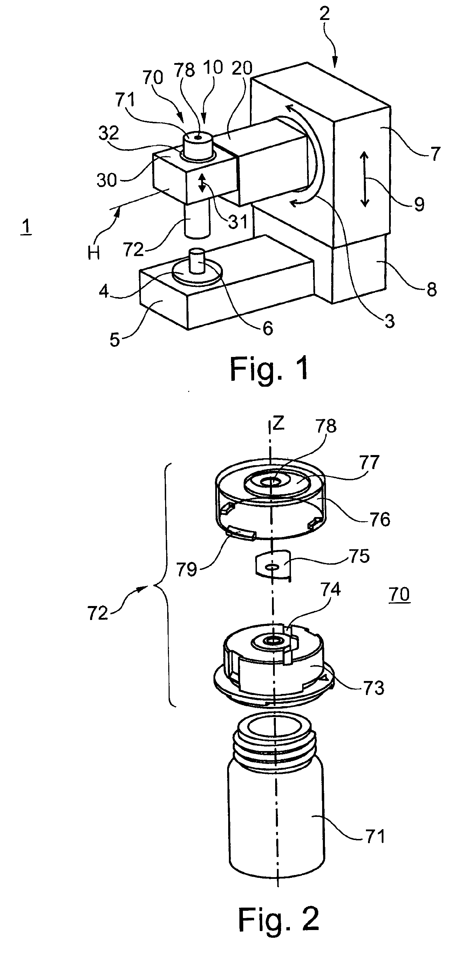

Figur 1 zeigt die grundsätzliche Anordnung einer erfindungsgemässen Dosiervorrichtung 1 mit einer Trägersäule 2, an welcher ein Trägerarm 10 um eine horizontale Achse H drehbar gelagert ist, wie dies durch den Drehpfeil 3 angedeutet wird. Der Trägerarm 10 umfasst eine Halteeinheit 20 sowie eine an der Halteeinheit 20 beweglich gelagerte Aufnahmeeinheit 30. In der Aufnahmeeinheit 30 ist eine Dosiereinheit 70 eingesetzt, welche ein Entnahmegefäss 71 und einen Dosierkopf 72 umfasst und deren Aufbau in der oben zitierten US 2011/0220686 ausführlich beschrieben wird. Die Halteeinheit 20 enthält mindestens einen (in der Figur 1 nicht sichtbaren) Bewegungsaktor, der die durch den Doppelpfeil 31 angedeutete, zum Lockern und Austragen des in der Dosiereinheit 70 befindlichen Dosiergutes dienende Bewegung erzeugt. Die abgebildete Dosiervorrichtung 1 befindet sich in Beschickungsstellung, in welcher die Dosiereinheit 70 mit dem Entnahmegefäss 71 voran, d.h. mit nach oben orientiertem Dosierkopf 72, in die Aufnahmeeinheit 30 eingesetzt wird. Diese Orientierung der Dosiereinheit 70 ist für die Aufbewahrung von gefüllten Dosiereinheiten bevorzugt, weil damit einer möglichen Verstopfung der Auslassöffnung 78 durch kompaktiertes Dosiergut vorgebeugt wird. Für den Dosiervorgang wird die Dosiereinheit 70 in ihrem Sitz 32 in der Aufnahmeeinheit 30 in der weiter unten beschriebenen Weise fixiert und mittels der erwähnten Drehung 3 um die horizontale Achse H kopfüber geschwenkt, sodass sich die Auslassöffnung 78 über dem auf der Waagschale 4 einer Waage 5 stehenden Zielgefäss 6 befindet. Die Trägersäule 2 kann ein feststehendes Untereil 7 und ein gemäss dem Doppelpfeil 9 vertikal verschiebbares Oberteil 8 umfassen, sodass die vertikale Position des Trägerarms 10 an verschieden hohe Zielgefässe 6 angepasst werden kann. Bei der Waage 5 kann es sich um eine mit der Dosiervorrichtung 1 fest verbundene Einheit oder auch um eine freistehende Laborwaage handeln, welche unter dem Trägerarm 10 angeordnet ist.

Wie die aus US 2011/0220686 übernommene Figur 2 zeigt, ist eine in die Sitzöffnung der Aufnahmeeinheit 30 passende Dosiereinheit 70 im wesentlichen zylinderförming und umfasst einen Entnahmebehälter 71 sowie einen Dosierkopf 72. Der Dosierkopf 72 umfasst einen an den Entnahmebehälter 71 anschraubbaren Grundkörper 73, einen in einer Führungsbahn 74 des Grundkörpers 73 linear beweglichen Verschlussschieber 75, sowie ein den Grundkörper 73 becherförmig überdeckendes und relativ zum Grundkörper 73 verdrehbares Stellglied 76, welches bei Drehung um die Zylinderachse Z der Dosiereinheit mittels eines innenseitig angeformten Exzenters 77 auf den Verschlussschieber 75 einwirkt, wodurch der Öffnungsquerschnitt der Auslassöffnung 78 kontinuierlich zwischen dem offenen und dem geschlossenen Zustand variiert werden kann.

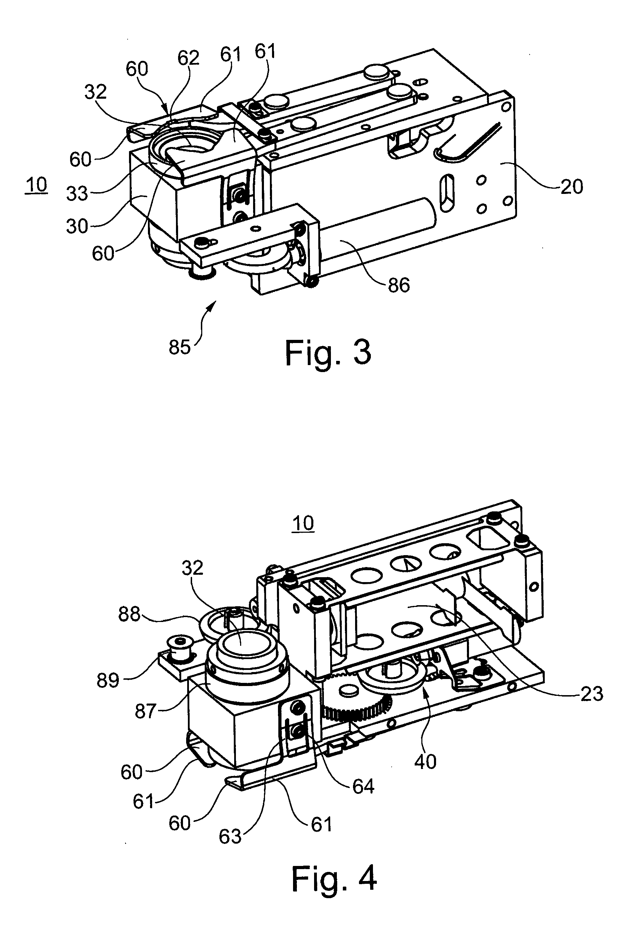

Figur 3 zeigt, in isometrischer Pespektive schräg von oben gesehen, eine detaillierte Darstellung des Trägerarms 10 der Dosiervorrichtung 1 in der Beschickungsstellung, mit der Halteeinheit 20 sowie der Aufnahmeeinheit 30, wobei hier jedoch keine Dosiereinheit 70 in den Aufnahmesitz 32 eingesetzt ist. Man erkennt insbesondere das Klemmmodul 60 mit den zwei Klemmbacken 61, hier in Beschickungsposition, d.h. in gespreiztem Zustand dargestellt. In der gezeigten Form sind die Klemmbacken 61 als Stanzteile aus federndem Material gefertigt und seitlich die Aufnahmeeinheit angeschraubt. In der Dosierposition, d.h. im nicht gespreizten Zustand des Klemmmoduls 60, wird die Dosiereinheit 70, bzw. das Stellglied 76 des Dosierkopfs 72 zwischen den beiden Klemmbacken 61 in einer gegenüber der Aufnahmeeinheit 30 vertikal definierten und unverrückbaren Lage festgehalten. In bezug auf den Aufnahmesitz 32 sind die Klemmbacken 61 einander diametral entgegengesetzt angeordnet. Mindestens eine der Klemmbacken 61 ist mit einem ersten Positionierungselement 62 versehen, hier in der Form einer ersten Aussparung 62 in der Kontur der vom Betrachter entfernteren Klemmbacke 61. Durch gegenseitigen Eingriff der ersten Aussparung 62 und eines dazu komplementären Vorsprungs 79 des Stellgliedes 76 des Dosierkopfs 72 (s. Figur 2) wird das Stellglied 76 relativ zur Aufnahmeeinheit 30 in einer definierten Drehlage fixiert. Dagegen ist der hohlzylindrische Aufnahmesitz 32 drehbar in der Aufnahmeeinheit 30 gelagert und an seinem oberen Rand mit einem zweiten Positionierungselement 33 in der Form einer zweiten Aussparung 33 versehen, welche durch gegenseitigen Eingriff mit einem dazu komplementären Vorsprung 80 des Grundkörpers 73 (s. Figur 2) eine Drehbewegung des Aufnahmesitzes 32 auf den Grundkörper 73 überträgt. Wie oben anhand von Figur 2 erläutert, wird durch die Relativdrehung des Grundkörpers 73 relativ zum Stellglied 76 eine Linearverschiebung des Verschlussschiebers 75 erzeugt, wodurch der Austrag von Dosiermaterial aus der Auslassöffnung steuerbar ist. Die dazu erforderliche Drehbewegung des Aufnahmesitzes 32 wird von einem Einstellmodul 85 mit einem zweiten Stellmotor 86 erzeugt, welche an der Vorderseite der Halteeinheit 20 (in bezug auf die Figur 3) angeordnet und durch ein umlaufendes Antriebsmittel 87 mit dem drehbaren Aufnahmesitz 32 verbunden ist.

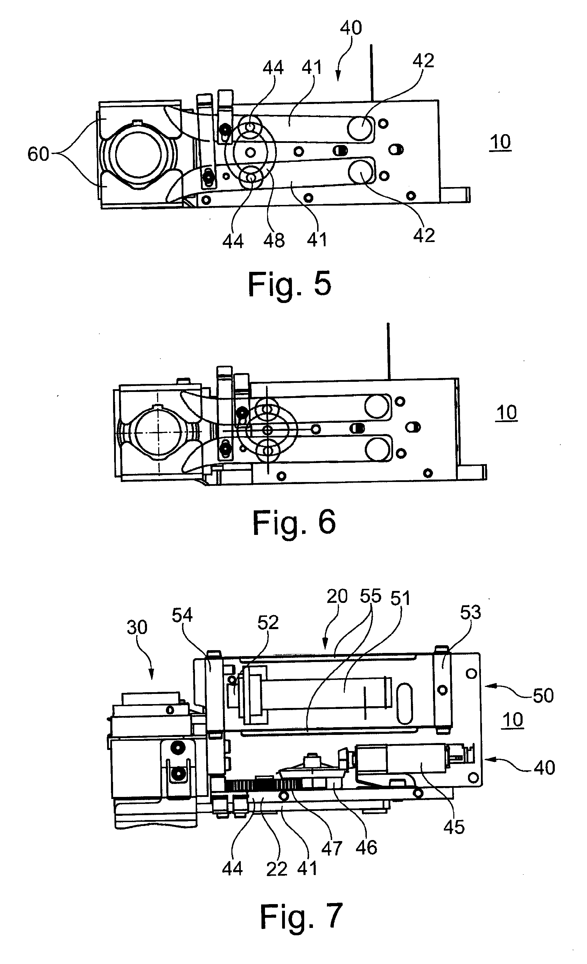

In Figur 4 wird derselbe Trägerarm 10 in der Dosierstellung gezeigt. Man erkennt im oberen Teil den Aktuatormechanismus 23, welcher die in Figur 1 gezeigte Bewegung der Aufnahmeeinheit 30 zur Lockerung des in der Dosiereinheit 70 befindlichen Dosierguts erzeugt und im unteren Teil des Spreizmoduls 40, welches das Öffnen und Schliessen der Klemmbacken 61 betätigt. Der Aktuator 50 und das Spreizmodul 40 werden nachfolgend anhand der Figuren 5 bis 7 näher erläutert. Ausserdem ersieht man aus Figur 4 die Gestaltung des Klemmmoduls 60, dessen identische Hälften als Stanzteile aus elastischem Flachmaterial geformt sind, wobei zwischen dem Befestigungsbereich 64 und der Klemmbacke 61 ein Federbereich oder Federelement 63 ausgebildet ist, sodass die Klemmbacken 61 in der Dosierposition durch eine Vorspannung der Federlemente 63 gegen das Stellglied 76 der Dosiereinheit 70 (s. Figur 2) gedrückt werden. Ausserdem ist in Figur 4 erkennbar, wie das Einstellmodul 85 (s. Figur 3) über ein umlaufendes Antriebsmittel 87, z.B. ein Antriebsband 87 mit Antriebsrad 88 und Spannrolle 89, die Dreheinstellung des Aufnahmesitzes 32 betätigt, mit welchem der Grundkörper 73 des Dosierkopfes 72 drehfest verbunden ist, wobei die Drehstellung des Grundkörpers 73 relativ zum Stellglied 76 über den Verschlussschieber 75 (s. Figur 2) den Öffnungsquerschnitt der Auslassöffnung 78 bestimmt.

Die Figuren 5 und 6 zeigen den Trägerarm 10 mit Blickrichtung auf den Klemmodul 60 und Spreizmodul 40, in Beschickungsposition (Figur 5) und in Dosierposition (Figur 6). Die beiden Spreizschenkel 41 des Spreizmoduls 40 sind an ihren ersten Enden 42 drehbar an der Grundplatte 21 der Halteeinheit 20 gelagert. In der in Figur 5 gezeigten Beschickungsstellung drücken die nasenförmig ausgebildeten zweiten Enden 43 der Spreizschenkel 41 von innen gegen die beiden Klemmmodulhälften, wodurch die Klemmbacken 61 auseinandergespreizt werden. Dagegen sind in der Dosierstellung gemäss Figur 6 die zweiten Enden 43 der Spreizschenkel 41 berührungsfrei von den Klemmmodulhälften beabstandet, sodass die Klemmbacken 61 durch die Vorspannung der Federelemente 63 gegen das Stellglied 76 einer im Aufnahmesitz 32 befindlichen Dosiereinheit 70 gedrückt werden. Zwischen dem ersten und zweiten Ende tragen die Spreizschenkel 41 je einen Führungsstift 44. Die Führungsstifte 44 erstrecken sich durch Öffnungen 22 (s. Figur 7) in der Grundplatte 21 in das Innere des Spreizmoduls 40, wo sie in eine elliptische Führungsnut 48 des drehbaren Betätigungselements 47 eingreifen, wodurch die Spreizschenkel 41 bei einer Drehung des Betätigungselements 47 um 90° zwischen der gespreizten und der geschlossenen Position bewegt werden. Die gestrichelt eingezeichnete elliptische Führungsnut 48 liegt bei der in Figur 5 gezeigten Beschickungsposition mit ihrem längeren Hauptdurchmesser quer zu den Spreizschenkeln, sodass die Spreizschenkel 41 durch die Führungsstifte 44 in der maximal gespreizten Stellung gehalten werden. Bei der in Figur 6 gezeigten Dosierposition liegt dagegen der kürzere Hauptdurchmesser der elliptischen Führungsnut 48 quer zu den Spreizschenkeln, sodass diese durch die Führungsstifte 44 in der maximal geschlossenen Stellung gehalten werden.

Figur 7 dient zur Verdeutlichung von Einzelheiten der Figuren 4 bis 6 und zeigt in seitlicher Ansicht wiederum den Trägerarm 10 mit dem Aktuator 50 im oberen Teil und dem Spreizmodul 40 im unteren Teil der Halteeinheit 20. Der Aktuator 50 umfasst einen Parallelführmechanismus mit einem in der Halteeinheit 20 festgelegten ersten Parallelogrammschenkel 53 und einem die Aufnahmeeinheit 30 tragenden beweglichen zweiten Parallelogrammschenkel 54 welcher durch die Parallellenker 55 am ersten Parallelogrammschenkel 53 angelenkt ist, sodass die Aufnahmeeinheit 30 gegenüber der Halteeinheit 20 innerhalb eines beschränkten Hubbereiches auf- und abwärts beweglich ist. Ein an der vom Betrachter aus rückwärtigen Seitenwand montierter Antriebsmotor 51 dient dazu, dem zweiten Parallelogrammschenkel 54 und der daran befestigten Aufnahmeeinheit 30 über die Nockenscheibe 52 eine Schlag- oder Schüttelbewegung zu erteilen, welche zur Auflockerung des in der Dosiereinheit 70 befindlichen Dosierguts dient.

Der im Innern der Halteeinheit liegende Antrieb des Spreizmodul 40 umfasst einen ersten Stellmotor 45, ein Untersetzungsgetriebe 46, sowie das Betätigungselement 47, welches als scheibenförmiges Zahnrad 47 ausgebildet ist, das auf seiner der Grundplatte 20 zugewandten Unterseite die elliptische Führungsnut 48 trägt, mit welcher die durch die Öffnungen 22 der Grundplatte 20 ragenden Führungsstifte 44 der Spreizschenkel 41 im Eingriff stehen. Das Spreizmodul bewegt sich nur während kurzen Arbeitsphasen, wobei das Betätigungselement 47 jeweils von dem ersten Stellmotor 45 um 90° gedreht wird und über die elliptische Führungsnut 48 und die Führungsstifte 44 das Öffnen, bzw. Schliessen der Spreizschenkel 41 betätigt , wobei der längere Hauptdurchmesser der elliptischen Führungsnut 48 abwechselnd quer und längs zum Trägerarm 10 orientiert ist.

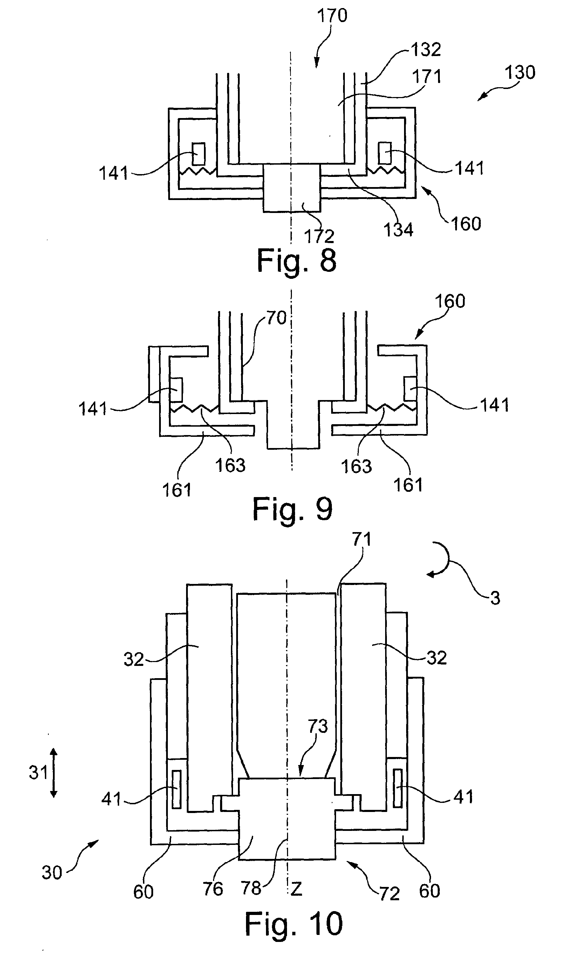

Die Figuren 8 und 9 zeigen eine alternative, zweite Ausführungsform der Erfindung in schematischer Querschnittsdarstellung in einer zur Horizontalachse H orthogonalen und die Zentralachse Z enthaltenden Ebene. Der Trägerarm umfasst nach wie vor eine Halteeinheit mit einem Spreizmodul und einem Aktuator sowie eine Aufnahmeeinheit mit einem Klemmmodul. Im Gegensatz zur vorangehend beschriebenen Ausführungsform gemäss den Figuren 3 bis 7 ist jedoch der Trägerarm bei der Ausführungsform der Figuren 8 und 9 nicht um eine horizontale Achse H schwenkbar. Bei der Beschickung wird die Dosiereinheit 170 bereits mit dem Dosierkopf 172 nach unten in die Aufnahmeeinheit 130 eingesetzt, wobei die Schulter des Entnahmebehälters auf einem Absatz 134 des Aufnahmesitzes 132 ruht. Die beiden Hälften des Klemmmoduls 160 sind hier nicht als Stanzteile aus elastischem Flachmaterial sondern massiv bzw. unelastisch ausgebildet und für die Bewegung zwischen der Dosierstellung (Figur 8) und Beschickungsstellung (Figur 9) in einer nicht näher illustrierten Weise an der Aufnahmeeinheit angelenkt. Federelemente 163 in der Form von Zugfedern spannen die Klemmbacken 161 in der Dosierstellung gegen das Stellglied des Dosierkopfs 172 und in der Beschickungsstellung gegen die gespreizten Schenkel 141 des Spreizmoduls. Abgesehen von der unterschiedlichen Detailgestaltung des Klemmmoduls 160 in den Figuren 8 und 9 ist an dieser Stelle besonders zu betonen, dass das erfinderische Konzept eines Klemmmoduls, der mit einem Spreizmodul geschlossen und geöffnet werden kann, auch in solchen Dosiervorrichtungen vorteilhaft angewendet werden kann, bei denen der Trägerarm nicht drehbar ist und die in die Aufnahmeeinheit eingesetzte Dosiereinheit somit nicht kopfüber geschwenkt wird. Dies gilt insbesondere dann, wenn die Dosiervorrichtung mit einem Aktuator zur Erzeugung von Schüttel- oder Schlagbewegungen ausgerüstet ist, wobei die Dosiereinheit mit ihrem Sitz in der Aufnahmeeinheit in festem Kontakt bleiben muss, damit die Bewegungen auf das Dosiermaterial übertragen werden um dasselbe aufzulockern.

Figur 10 zeigt schematisch einen zur Horizontalachse H orthogonalen und die Zylinderachse Z der Dosiereinheit 70 enthaltenden Querschnitt der Aufnahmeeinheit 30 der Figuren 3 bis 7 und dient einer nochmaligen Verdeutlichung der Funktionen welchen eine Dosiereinheit 70 in einer erfindungsgemässen Dosiervorrichtung 1 allgemein, d.h. unabhängig von spezifischen Ausführungsformen einzelner Moduln und Elemente, unterworfen ist, nämlich:
- Festhalten der Dosiereinheit 70 in der Aufnahmeeinheit 30, indem das Stellglied 76 des Dosierkopfes 72 zwischen den Klemmbacken 61 des Klemmmoduls 60 durch eine Federvorspannung festgeklemmt wird, wobei die Klemmung durch Spreizen und Schliessen der Spreizschenkel 41 eines Spreizmoduls 40 gelöst bzw. aktiviert werden kann;
- Variables Öffnen und Schliessen der Auslassöffnung 78, indem der Aufnahmesitz 32 (in Figur 10 horizontalschraffiert) in der Aufnahmeeinheit 30 (schrägschraffiert) durch ein Einstellmodul 85 (siehe Fig. 3) um die zentrale Achse Z gedreht wird und dabei durch Mitnahme den Grundkörper 73 samt angeschraubtem Entnahmebehälter 71 gegenüber dem Stellglied 76 verdreht;
- Auflockern des in der Dosiereinheit 70 befindlichen Dosierguts durch eine Schlag- oder Schüttelbewegung (durch Doppelpfeil 31 angedeutet) mittels eines Aktuators 50; sowie
- (nur gegebenenfalls) Überkopfschwenken der Dosiereinheit 70 um eine horizontale Schwenkachse H (durch Drehpfeil 3 angedeutet) durch Schwenkung des Trägerarms 10 gegenüber der Trägersäule 2.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, wobei z.B. die Bewegung der Klemmbacken zwischen der gespreizten Beschickungsposition und der geschlossenen Dosierposition durch die Kraftswirkung von ein- und ausschaltbaren Elektromagneten betätigt werden könnte. Es ist auch denkbar, dass die Spreizschenkel des Spreizmoduls durch eine Zugfeder in Richtung ihrer Schliessrichtung vorgespannt sind und die Führungstifte entlang der Aussenkante einer elliptischen Kurvenscheibe anstatt in einer elliptischen Nut geführt werden. Es versteht sich, dass solche Abwandlungen der gezeigten Ausführungsbeispiele mit dem Fachmann vertrauten Konstruktionselementen innerhalb des durch die Ansprüche definierten Bereichs der Erfindung liegen.

### Bezugszeichenliste

- 1: Dosiervorrichtung
- 2: Trägersäule
- 3: Drehbewegung von 10 um horizontale Achse H
- 4: Waagschale
- 5: Waage
- 6: Zielgefäss
- 7: Unterteil
- 8: Oberteil
- 9: Vertikalbewegung von 8
- 10: Trägerarm
- 20: Halteeinheit
- 21: Grundplatte von 20
- 22: Öffnungen in 21
- 130, 30: Aufnahmeeinheit
- 31: Bewegung von 30 relativ zu 20
- 132, 32: Aufnahmesitz für 170 bzw. 70
- 33: Zweites Positionierungselement, Aussparung von 32
- 134: Absatz von 132
- 40: Spreizmodul
- 141, 41: Spreizschenkel
- 42: Erstes Ende des Speizschenkels
- 43: Zweites Ende des Spreizschenkels
- 44: Führungsstifte der Spreizschenkel 41
- 45: Erster Stellmotor
- 46: Untersetzungsgetriebe
- 47: Betätigungselement
- 48: Elliptische Führungsnut
- 50: Aktuator
- 51: Motor
- 52: Nockenscheibe
- 53: Erster Parallelogrammschenkel
- 54: Zweiter Parallelogrammschenkel
- 55: Parallellenker
- 160, 60: Klemmmodul
- 161, 61: Klemmbacken
- 62: Erstes Positionierungselement, Aussparung in Klemmbacke
- 163, 63: Federelement des Klemmmoduls
- 64: Befestigungsscheibe
- 170, 70: Dosiereinheit
- 172, 71: Entnahmebehälter
- 172, 72: Dosierkopf
- 73: Grundkörper von 72
- 74: Führungsbahn
- 75: Verschlussschieber
- 76: Stellglied
- 77: Exzenter
- 78: Auslassöffnung
- 79: Vorsprung von 76
- 80: Vorsprung von 73
- 85: Einstellmodul
- 86: Zweiter Stellmotor
- 87: Antriebsband
- 88: Antriebsrad
- 89: Spannrolle
- H: Horizontale Drehachse
- Z: Zylinderachse von 70

## Patentansprüche

1. Dosiervorrichtung (1) zur Dosierung fliessfähiger Substanzen, mit einer Trägersäule (2) sowie mit einem von der Trägersäule auskragenden horizontalen Trägerarm (10), welcher eine Halteeinheit (20) aufweist, an der mindestens eine beweglich gelagerte Aufnahmeeinheit (30) angeordnet ist, in welcher Aufnahmeeinheit (30) mindestens eine Dosiereinheit (70) einsetzbar beziehungsweise aus dieser Aufnahmeeinheit (30) entfernbar ist, wobei die Halteeinheit (20) mindestens einen auf die Aufnahmeeinheit (30) wirkenden Bewegungsaktuator (50) enthält, **dadurch gekennzeichnet, dass** die Dosiereinheit (70) mittels eines vorgespannten Klemmmoduls (60) an der Aufnahmeeinheit (30) befestigbar ist und dass zum Einsetzen und/oder Entfernen der Dosiereinheit (70) das Klemmmodul (60) mittels eines der Halteeinheit (20) zugeordneten Spreizmoduls (40) aus einer Dosierposition in eine Beschickungsposition spreizbar ist, wobei das Spreizmodul (40) in der Dosierposition von der Aufnahmeeinheit (30) entkoppelt ist.

2. Dosiervorrichtung (10) nach Anspruch 1, **dadurch gekennzeichnet, dass** das Klemmmodul (60) ein Federelement (63) aufweist, welches in der Dosierposition vorgespannt ist.

3. Dosiervorrichtung (10) nach Anspruch 1 oder 2, **dadurch gekennzeichnet, dass** das Klemmmodul (60) zwei Klemmbacken (61) aufweist, wodurch in der Dosierposition die Dosiereinheit (70) zwischen den beiden Klemmbacken (61) in einer gegenüber der Aufnahmeeinheit (30) vertikal definierten und unverrückbaren Lage positionierbar ist.

4. Dosiervorrichtung (10) nach Anspruch 3, **dadurch gekennzeichnet, dass** mindestens eine der Klemmbacken (61) ein erstes Positionierungselement (62) aufweist, wobei die Dosiereinheit (70) durch gegenseitigen Eingriff des ersten Positionierungselementes (62) und einer dazu komplementären Ausformung (79) der Dosiereinheit (70) in einer gegenüber der Aufnahmeeinheit (30) definierten Drehlage relativ zu einer vertikalen Drehachse (Z) positionierbar ist.

5. Dosiervorrichtung (10) nach einem der vorangehenden Ansprüche, **dadurch gekennzeichnet, dass** das Klemmmodul (60) an der Aufnahmeeinheit (30) befestigt ist.

6. Dosiervorrichtung (10) nach einem der Ansprüche 3 bis 5, **dadurch gekennzeichnet, dass** das Spreizmodul (40) zwei Spreizschenkel (41) aufweist, welche die beiden Klemmbacken (61) des Klemmmoduls (60) zum Einsetzen und Herausnehmen der Dosiereinheit (70) auseinanderdrücken können.

7. Dosiervorrichtung (10) nach Anspruch 6, **dadurch gekennzeichnet, dass** jeder Spreizschenkel (41) ein erstes Ende (42) und ein zweites Ende (43) aufweist, wobei das erste Ende (42) drehbar an der feststehenden Halteeinheit (20) befestigt ist und das zweite Ende (43) des Spreizschenkels (41) in einem Freiraum zwischen Aufnahmeeinheit (30) und Klemmbacke (61) angeordnet ist.

8. Dosiervorrichtung (10) nach Anspruch 7, **dadurch gekennzeichnet, dass** das zweite Ende (43) des Spreizschenkels (41) in Dosierposition sowohl von dem Klemmmodul (60) als auch von der Aufnahmeeinheit (30) berührungsfrei beabstandet ist.

9. Dosiervorrichtung (10) nach einem der Ansprüche 6 bis 8, **dadurch gekennzeichnet, dass** die Spreizschenkel (41) mittels eines drehbeweglichen Betätigungselements (47) von der Dosierposition in die Beschickungsposition bewegbar sind.

10. Dosiervorrichtung (10) nach einem der Ansprüche 6 bis 9, **dadurch gekennzeichnet, dass** das zweite Ende (43) jedes der beiden Spreizschenkel (41) eine nasenförmig gegen die entsprechende Klemmbacke (61) gerichtete Kontur aufweist.

11. Dosiervorrichtung (10) nach einem der vorangehenden Ansprüche, **dadurch gekennzeichnet, dass** Aufnahmeeinheit (30) federnd an Halteeinheit (20) befestigt ist.

12. Dosiervorrichtung (10) nach einem der vorangehenden Ansprüche, **dadurch gekennzeichnet, dass** der Bewegungsaktuator (50) einen Motor (51) beeinhaltet, welcher über eine Nocken- oder Kurvenscheibe (52) Schüttel- oder Schlagbewegungen auf die federnd geführte Aufnahmemeinheit (30) überträgt.

13. Dosiervorrichtung (10) nach einem der vorangehenden Ansprüche, **dadurch gekennzeichnet, dass** der Trägerarm (10) an der Trägersäule (2) um eine horizontale Drehachse H aus einer Beschickungsstellung in eine Dosierstellung drehbar ist.

## Claims

1. Dosage-dispensing device (1), operable to dispense measured quantities of free-flowing substances, comprising a support column (2) as well as a horizontal support arm (10) which is cantilevered on the support column and includes a holder unit (20) on which at least one movably supported receiving unit (30) is arranged, wherein at least one dosage unit (70) can be set into, as well as taken out of, said receiving unit (30), and wherein the holder unit (20) contains at least one agitation actuator (50) acting on the receiving unit (30), **characterized in that** the dosage unit (70) can be fastened to the receiving unit (30) by means of a pre-tensioned clamping module (60) and that for the insertion and/or removal of the dosage unit (70), the clamping module (60) can be spread apart from a dispensing position into a loading position by means of an opener module (40) that is based on the holder unit (20), wherein the opener module (40) is uncoupled from the receiving unit (30) when the clamping module (60) is in the dispensing position.

2. Dosage-dispensing device (10) according to claim 1, **characterized in that** the clamping module (60) comprises a spring element (63) which is pre-tensioned in the dispensing position.

3. Dosage-dispensing device (10) according to claim 1 or 2, **characterized in that** the clamping module (60) comprises two clamping jaws (61) whereby the dosage unit (70), when it is in the dispensing position, can be held between the two clamping jaws (61) in a position that is vertically defined and immovable relative to the receiving unit (30).

4. Dosage-dispensing device (10) according to claim 3, **characterized in that** at least one of the clamping jaws (61) comprises a first position-defining element (62) whereby, through mutual engagement between the position-defining element (62) and a complementary surface feature (79) that is formed on the dosage unit (70), the dosage unit (70) can be held in a defined rotary position in the receiving unit (30) relative to a vertical rotary axis Z.

5. Dosage-dispensing device (10) according to one of the preceding claims, **characterized in that** the clamping module (60) is fastened to the receiving unit (30).

6. Dosage-dispensing device (10) according to one of the claims 3 to 5, **characterized in that** the opener module (40) comprises two pusher arms (41) designed to spread apart the two clamping jaws (61) of the clamping module (60) to allow the dosage unit (70) to be put in or taken out.

7. Dosage-dispensing device (10) according to claim 6, **characterized in that** each pusher arm (41) has a first end (42) and a second end (43), wherein the first end (42) is pivotally connected to the holder unit (20) and the second end (43) of the pusher arm (41) is arranged in a free space between the receiving unit (30) and the clamping jaw (61).

8. Dosage-dispensing device (10) according to claim 7, **characterized in that** in the dispensing position the second end (43) of the pusher arm (41) is spaced apart from, and out of contact with, the clamping module (60) and the receiving unit (30).

9. Dosage-dispensing device (10) according to one of the claims 6 to 8, **characterized in that** the pusher arms (41) can be moved from the dispensing position into the loading position by means of a rotatable actuating element (47).

10. Dosage-dispensing device (10) according to one of the claims 6 to 9, **characterized in that** the second end (43) of each pusher arm (41) has a nose-shaped contour projection directed towards the respective clamping jaw (61).

11. Dosage-dispensing device (10) according to one of the preceding claims, **characterized in that** the receiving unit (30) is resiliently connected to the holder unit (20).

12. Dosage-dispensing device (10) according to one of the preceding claims, **characterized in that** the agitation actuator (50) comprises a motor (51) which by way of a cam disk or contour disk (52) transmits shaking- or shocking movements to the resiliently constrained receiving unit (30).

13. Dosage-dispensing device (10) according to one of the preceding claims, **characterized in that** the support arm (10) can be turned on the support column (2) about a horizontal axis H from a loading position into a dispensing position.

## Revendications

1. Dispositif de dosage (1) pour le dosage de substances fluides, avec une colonne de support (2) ainsi qu'avec un bras de support (10) faisant saillie horizontalement à partir de la colonne de support, lequel comporte une unité de maintien (20) sur laquelle est agencée au moins une unité de réception (30) montée de façon mobile, au moins une unité de dosage (70) pouvant être insérée dans ladite unité de réception (30) ou retirée hors de cette unité de réception (30), dans lequel l'unité de maintien (20) contient au moins un actionneur de mouvement (50) agissant sur l'unité de réception (30), **caractérisé en ce que** l'unité de dosage (70) peut être fixée sur l'unité de réception (30) au moyen d'un module de serrage (60) et **en ce que** pour l'insertion et/ou le retrait de l'unité de dosage (70), le module de serrage (60) peut être écarté au moyen d'un module d'écartement (40) attribué à l'unité de maintien (20), d'une position de dosage vers une position de chargement, dans lequel le module d'écartement (40) est désaccouplé de l'unité de réception (30) dans la position de dosage.

2. Dispositif de dosage (10) selon la revendication 1, **caractérisé en ce que** le module de serrage (60) comporte un élément à ressort (63) précontraint dans la position de dosage.

3. Dispositif de dosage (10) selon la revendication 1 ou 2, **caractérisé en ce que** le module de serrage (60) comporte deux mâchoires de serrage (61) permettant de positionner l'unité de dosage (70) entre les deux mâchoires de serrage (61) dans la position de dosage, dans une position fixe et définie verticalement par rapport à l'unité de réception (30).

4. Dispositif de dosage (10) selon la revendication 3, **caractérisé en ce qu'**au moins l'une des mâchoires de serrage (61) comporte un premier élément de positionnement (62), dans lequel l'unité de dosage (70) peut être positionnée par rapport à un axe de rotation vertical (Z) dans une position de rotation définie par rapport à l'unité de réception (30), par engagement mutuel du premier élément de positionnement (62) et d'un évidement complémentaire (79) de l'unité de dosage (70).

5. Dispositif de dosage (10) selon l'une des revendications précédentes, **caractérisé en ce que** le module de serrage (60) est fixé à l'unité de réception (30).

6. Dispositif de dosage (10) selon l'une des revendications 3 à 5, **caractérisé en ce que** le module d'écartement (40) comporte deux jambes d'écartement (41) capables d'écarter les deux mâchoires de serrage (61) du module de serrage (60), pour l'insertion et le retrait de l'unité de dosage (70).

7. Dispositif de dosage (10) selon la revendication 6, **caractérisé en ce que** chaque jambe d'écartement (41) comporte une première extrémité (42) et une deuxième extrémité (43), dans lequel la première extrémité (42) est fixée de façon rotative à l'unité de maintien (20) immobile, et la deuxième extrémité (43) de la jambe d'écartement (41) est agencée dans un espace libre entre l'unité de réception (30) et la mâchoire de serrage (61).

8. Dispositif de dosage (10) selon la revendication 7, **caractérisé en ce que** dans la position de dosage, la deuxième extrémité (43) de la jambe d'écartement (41) est espacée sans contact aussi bien du module de serrage (60) que de l'unité de réception (30).

9. Dispositif de dosage (10) selon l'une des revendications 6 à 8, **caractérisé en ce que** les jambes d'écartement (41) peuvent être déplacées de la position de dosage vers la position de chargement au moyen d'un élément d'actionnement (47) mobile en rotation.

10. Dispositif de dosage (10) selon l'une des revendications 6 à 9, **caractérisé en ce que** la deuxième extrémité (43) de chacune des deux jambes d'écartement (41) présente un contour en forme de nez orienté vers la mâchoire de serrage (61) correspondante.

11. Dispositif de dosage (10) selon l'une des revendications précédentes, **caractérisé en ce que** l'unité de réception (30) est fixée de façon élastique à l'unité de maintien (20).

12. Dispositif de dosage (10) selon l'une des revendications précédentes, **caractérisé en ce que** l'actionneur de mouvement (50) contient un moteur (51) transmettant des mouvements de secousse ou de frappe à l'unité de réception (30) guidée de façon élastique, par le biais d'un disque à came ou d'une came plate (52).

13. Dispositif de dosage (10) selon l'une des revendications précédentes, **caractérisé en ce que** le bras de support (10) peut tourner sur la colonne de support (2), autour d'un axe de rotation horizontal H, d'une position de chargement vers une position de dosage.
